# EUROPEAN PATENT SPECIFICATION

(11) **EP 2 798 946 B1**
(45) Date of publication and mention of the grant of the patent: **14.10.2015**
(21) Application number: 14164691.9
(22) Date of filing: 15.04.2014
(51) Int. Cl.: A01F 15/07

(54) **Film cutter**
Folienschneider
Découpeur de films

(30) Priority: 03.05.2013 GB 201308044
(43) Date of publication of application: 05.11.2014
(73) Proprietor: Kuhn-Geldrop B.V., 5667 KP Geldrop (NL)
(72) Inventor: de Bruijin, Bart Jacobus Helena, NL-6068 Neer (NL)
(74) Representative: Raynor, Simon Mark

(56) References cited:
- EP-A1- 1 502 495
- EP-A1- 1 607 331
- EP-A1- 2 160 939
- KR-B1- 101 107 772

## Description

The present invention relates to a film cutter for an agricultural bale wrapper that applies a stretch film wrapping to the outer surface of an agricultural bale.

The bale wrapper may be either an independently operated machine (which carries out bale wrapping only), or it may be incorporated within a combined baler and wrapper machine.

It is well known to apply stretch film wrapping to agricultural bales, in order to protect the contents of the bale from the weather and, in the case of silage crops, to form a substantially air and watertight enclosure within which the crop can mature or ferment to form silage.

The bale can be either cylindrical (called a "circular" bale) or it can be a parallelepiped (called a "rectangular" or "square" bale). In either case, the bale is generally wrapped by rotating the bale around a horizontal axis while at the same time providing relative rotation about a vertical axis between the bale and a dispenser of the wrapping film. This produces a series of overlapping film layers, which cover the entire outer surface of the bale to form an air and watertight enclosure. Generally, multiple layers of film are applied to increase the puncture-resistance of the wrapper and improve its airtight properties.

There are two main types of bale wrapper in common usage, which are illustrated in Figures 5 and 6 of US 5,327,706. Figure 5 of US 5,327,706 illustrates a satellite-type bale wrapper in which the bale is rotated about a horizontal axis while the film dispenser rotates around the bale about a vertical axis. Figure 6 of US 5,327,706 illustrates a turntable-type bale wrapper apparatus in which the bale is located on a turntable that rotates about a vertical axis while at the same time rotating the bale about a horizontal axis, thereby applying film to the outer surface of the bale from a stationary film dispenser.

The present invention is concerned mainly with bale wrappers of the satellite-type, although it is also applicable to turntable-type bale wrappers.

In a satellite-type bale wrapper the bale is placed on a support structure that generally includes at least two parallel horizontally-placed rollers, of which one or more are driven for rotation about a horizontal axis. The bale wrapper also includes at least one film dispenser that is configured to rotate about a vertical axis around the support structure.

In operation, a bale is placed on the support structure and the rollers are driven causing the bale to rotate about a substantially horizontal axis. The film dispenser is simultaneously driven for rotation about its vertical rotation axis. As the support structure and the film dispenser rotate about their mutually orthogonal axes, wrapping film is drawn from the film dispenser onto the bale producing a series of overlapping layers that cover the surface of the bale. At the end of the wrapping cycle, the length of wrapping film between the film dispenser and the bale is grabbed and severed by a film cutter device and the wrapped bale is then deposited on the ground, allowing a new bale to be wrapped.

We have found that in certain circumstances operation of the film cutter may be unreliable. In particular, we have found that the film may not be completely severed with the result that when the wrapped bale is deposited on the ground and the bale wrapper moves away part of the film wrapping may be pulled away from the bale leaving it partially unwrapped. Alternatively, the wrapping film may be damaged by operation of the film cutter with the result that when another bale is to be wrapped the wrapping film tears and the film dispenser has to be rethreaded manually before wrapping can commence, causing inefficiency and reduced output.

These problems occur particularly, but not exclusively, when wrapping square bales. It is believed that this is due to the uneven shape of the square bale and differences in the lengths of the bales. As a result, the angle and position of the film relative to the film cutter cannot be accurately predicted. This makes it difficult to grab and cut the film in a predictable and reliable manner. Therefore, operation of the film cutter may be unreliable.

EP 1607331 A describes a guiding and retaining means for a baler wrapper comprising an arm assembly that is movable between a first position in which it extends between the bale and a film dispenser unit, and a second position in which it holds a cut end of the film in preparation for wrapping another bale.

It is an object of the present invention to provide a film cutter for a bale wrapper apparatus that mitigates at least some of the aforesaid disadvantages.

According to one aspect of the present invention there is provided a film cutter for an agricultural bale wrapper, the film cutter including a support element, a collector element, a cushion element and a knife element, wherein the film cutter is reconfigurable between a collecting configuration in which wrapping film dispensed by the bale wrapper is collected by the film cutter and a clamping configuration in which the wrapping film is clamped between the collector element and the cushion element and is severed by the knife element, wherein the support element is configured to engage the wrapping film when the film cutter is in the collecting configuration and to disengage the wrapping film when the film cutter is in the clamping configuration, and wherein the support element is configured to move from the engaged condition to the disengaged condition without significant sliding contact between the support element and the film.

The term "sliding contact" as used herein means relative movement between the touching surfaces of the support element and the film. Sliding contact between these surfaces causes wear on the surface of the film, which can weaken the film and cause it to tear when subjected to tension. By avoiding sliding contact between the support element and the film it is possible to prevent the damage to the film that can cause it to tear. Thus, more reliable operation of the bale wrapper can be achieved. The film cutter of the present invention is also substantially unaffected by the angle of the wrapping film as it is deflected around the film cutter. Operation of the film cutter is not therefore affected by the position of bale on the bale wrapper, or by the size or shape of the bale.

The support element may for example be configured to extend substantially vertically upwards when the film cutter is in the collecting condition. After the wrapping operation has been completed the film dispenser rotates to stretch a length of film around the film cutter so that the film is deflected around the support element. The support element supports the film in this position until it is collected by the collector element and gathered into a bundle, which is then clamped between the collector element and the cushion element. The support element simultaneously retracts to the disengaged position without significant sliding contact between the support element and the film. The knife element then severs the film and the wrapped bale is deposited on the ground ready for collection.

Advantageously, the support element extends substantially perpendicular to the length direction of the wrapping film when it is in an engaged condition.

Advantageously, the support element has a longitudinal axis and is configured to move from the engaged condition to the disengaged condition without significant movement in the direction of the longitudinal axis. The support element may for example be in the form of an elongate rod or bar having a longitudinal axis that extends from one end of the rod or bar to the other end. By avoiding significant movement in the direction of the longitudinal axis, sliding contact between the support element and the film can be avoided or at least reduced to a minimum so as to avoid damaging the film.

Advantageously, the support element is mounted adjacent the collector element and is configured so that when the film cutter is in the collecting configuration the wrapping film is deflected around the support element.

Advantageously, the support element is configured to pivot about a pivot axis located adjacent a first end thereof. This allows the support element to move away from the film without moving in the axial direction of the support element, and without causing sliding contact between the support element and the film.

Advantageously, the support element is configured to pivot between an engaged position in which it extends substantially perpendicular to the length direction of the wrapping film and a disengaged position in which it extends substantially parallel to the length direction of the wrapping film. Preferably, the pivot axis is located at or adjacent the lower end of the support element (when the film cutter is in the collecting configuration and the support element is engaged with the film), so that the support element rotates downwards towards a disengaged position below the level of the film.

Advantageously, the support element is configured to pivot through an angle in the range 60°-120°, preferably 80°-90°.

Advantageously, the support element is connected to the collector element by a connecting element that allows axial and pivoting movement of the support element relative to the collector element. For example, the support element may be connected to the collector element by a connecting element comprising a pivoting guide device that is attached to the collector element and allows sliding movement of the support element through the guide in the axial direction of the support element. This connecting element and the pivot at the first end of the support element cooperate to control the position of the support element as the film cutter moves between the collecting and clamping configurations.

Advantageously, the support element includes a gathering formation for gathering the film into a bundle. This gathering formation may for example consist of a V-shaped bend in the support element.

Advantageously, the collector element includes a gathering element that cooperates with the gathering formation to gather the film into a bundle. This gathering element may for example consist of a triangular loop of wire or an equivalent structure attached to the distal end of the collector element. The gathering formation and the gathering element together help to form the film into a tight bundle that can be severed cleanly by the knife element.

Advantageously, the collector element is configured to pivot about a pivot axis located adjacent a first end thereof. The first end is preferably the lower end of the collector element. The collector element is also preferably mounted via the pivot axis to a pivot arm that pivots backwards as the collector element pivots forwards to cause a folding movement of the collector element and pivot arm mechanism.

Advantageously, the collector element is configured to lift the film away from the support element as the film cutter is reconfigured from the collecting configuration to the clamping configuration. This helps to prevent sliding contact between the support element and the film and avoids causing damage to the film.

According to another aspect of the invention there is provided a bale wrapper including a bale support assembly that includes means for rotating a bale about a substantially horizontal first axis, at least one film dispenser for dispensing film onto the bale, drive means for causing relative rotation between the bale support assembly and the film dispenser about a second axis that is substantially perpendicular to the first axis, and a film cutter according to any one of the preceding statements of invention.

Advantageously, the bale support assembly includes at least two roller assemblies for supporting and rotating a bale.

Advantageously, at least one said roller assembly includes a support mechanism that may be actuated to adjust the separation of the roller assemblies.

In a preferred embodiment, the bale wrapper comprises a satellite-type bale wrapper having a rotating film dispenser. Alternatively, the bale wrapper may comprise a turntable-type bale wrapper having a rotating bale support assembly and a fixed film dispenser.

An embodiment of the invention will now be described by way of example with reference to the accompanying drawings, in which:
Figure 1 is a perspective view showing a bale wrapper apparatus from the front;
Figures 2a and 2b are plan views showing a bale in two different positions on the bale wrapper during a film cutting operation;
Figures 3a to 3f are side views of a prior art film cutter at different stages of a film cutting operation;
Figures 4a to 4f are side views of a film cutter according to an embodiment of the invention at different stages of a film cutting operation; and
Figures 5a and 5b are cross-sectional views through the film cutter at different stages of the film cutting operation.

The bale wrapper apparatus, which is indicated generally by the reference number 2, includes an arch-shaped wheel frame 4 in the form of a portal having a cross-beam 6 and two side stanchions 8a,8b, each of which is supported by a wheel 10. The cross-beam 6 is in two parts that are connected telescopically, allowing the width of the portal to be reduced for road transit. A tow bar12 is connected to the left-side stanchion 8b by a pivot 14. The angle of the tow bar 12 relative to the frame 4 can be adjusted by means of a hydraulic cylinder 16, so that the bale wrapper apparatus can be towed either directly behind a tractor or displaced to one side thereof. The tow bar 12 also includes a retractable jockey wheel 18 and carriers 20 for spare reels of wrapping film.

The bale wrapper apparatus 2 includes a bale support assembly indicated generally by the reference number 22 for supporting and rotating an agricultural bale 24. In this example a rectangular bale is shown. It will be understood however that the bale wrapper apparatus may also be used to wrap bales of different shapes. The bale support assembly 22 includes a pair of roller assemblies 26, each of which is connected to one of the side stanchions 8a,8b by a respective swing arm assembly 28. The swing arm assembly 28 allows the respective roller assembly 26 to be moved inwards and outwards substantially parallel to the ground (that is, substantially horizontally.

Each roller assembly 26 includes a pair of rotatable rollers comprising an upper roller 42a and a lower roller 42b. Hydraulic drive motors (not shown) are provided for driving each pair of rollers independently in a clockwise or anti-clockwise direction.

Each roller 42a,42b is supported at its mid-point and the outer portions 43 of each roller 42a,42b are cantilevered, the ends of the roller being free. A plurality of elongate splines 46 are provided on the cylindrical surface of the roller to provide good traction with a supported bale.

The bale wrapper 2 includes a pair of dispensers 50 for dispensing wrapping film. Each dispenser 50 is mounted on the end of an arm 52 that is rotatably attached to a dispenser drive mechanism 54 mounted on the cross-beam 6. A safety cut-out device 53 that halts operation of the bale wrapper if it contacts an obstruction is associated with each dispenser 50. Each dispenser 50 includes a pre-stretching mechanism 56 for stretching the film 58 before it is applied to the bale 24. These dispensers, safety cut-out devices and pre-stretching mechanisms are all conventional and so will not be described in detail.

The bale wrapper also includes a pair of film cutters 60 for cutting the film 58 after it has been applied to the bale 24, so that the wrapped able 24 can be deposited on the ground and wrapping of a new bale can commence. The structure and operation of the film cutters 60 is described in more detail below.

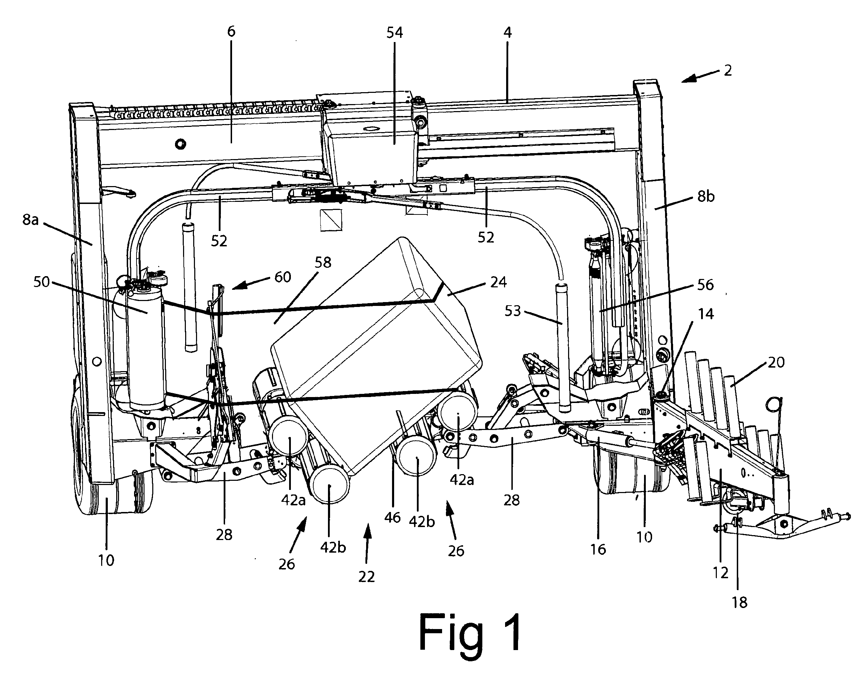

In order to wrap a bale 24, the bale wrapper apparatus 2 is first drawn up to the bale so that the frame 4 straddles the bale. The swing arm assemblies 28, which are initially retracted outwards, are then moved inwards so that the roller assemblies 26 engage the sides of the bale 24. The rollers 42a,42b are rotated by the hydraulic motors so that the inner portion of each roller rotates upwards, thereby lifting the bale 24. At the same time, the swing arm assemblies 28 are moved further inwards, so that the roller assemblies 26 then support the bale 24 from below, as shown in Figure 1.

Once the bale has been lifted to this supported position, the ends of the film 58 are fed from the film cutters 60 and the dispensers 50 and attached to the bale 24. The rollers 42a,42b are all then rotated in the same direction (clockwise or anti-clockwise), causing the bale 24 to rotate about a substantially horizontal axis. At the same time, the dispensers 50 rotate about the vertical axis of the dispenser drive mechanism 54, thereby applying a series of overlapping layers of film to the surface of the bale. This continues until the entire surface of the bale has been wrapped with one or more layers of film.

Once wrapping has been completed, the film 58 is severed by the film cutters 60 and the swing arm assemblies 28 are withdrawn outwards to deposit the wrapped bale on the ground. The process is then repeated with another bale.

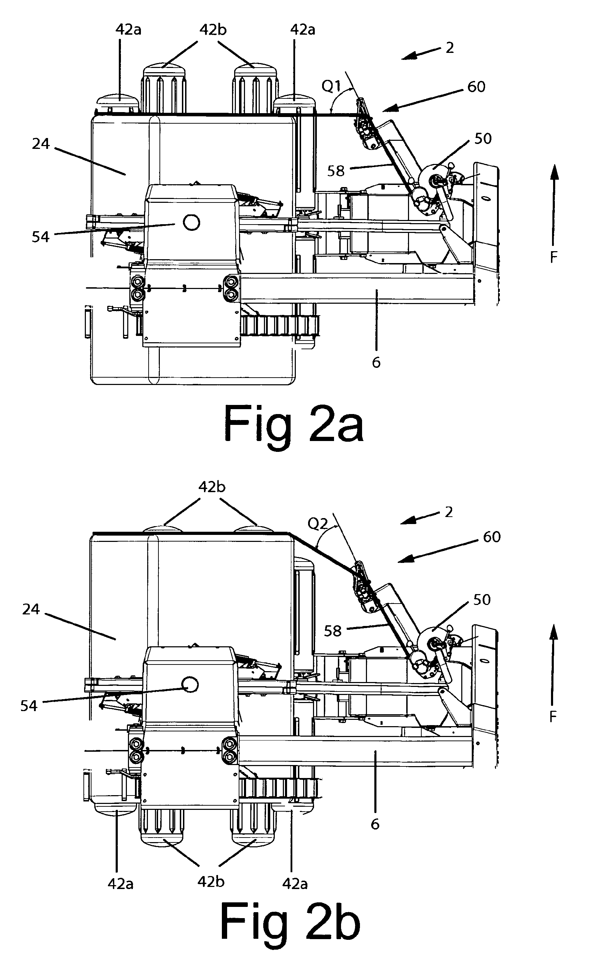

Figures 2a and 2b show a square bale 24 on the bale wrapper 2 during a wrapping process. As the bale 24 is rotated on the rollers 42a, 42b during a wrapping process it is quite common for the bale to become displaced forwards or backwards from a central location on the rollers, particularly for example if the bale wrapper is inclined forwards or backwards during the wrapping operation. This is illustrated in figures 2a and 2b, which show the bale and the bale wrapper in plan view with the forward direction shown by the arrow F.

In figure 2a the bale 24 is displaced towards the rear of the bale wrapper. The rear ends of the support rollers 42a,42b are completely hidden beneath the bale 24 while the front ends of the support rollers 42a,42b protrude significantly beyond the front edge of the bale 24. The bale has already been wrapped but the length of film 58 that extends from the film dispenser reel 50 to the bale 24 via the film cutter 60 has not yet been cut. Owing to the rearward position of the bale 24 the film 58 is deflected through a relatively large angle Q1 where it passes around the film cutter 60. In this example the angle Q1 is about 60°. This results in a relatively large force between the film 58 and the film cutter 60, which can cause the film to tear.

In figure 2b the bale 24 is displaced towards the front of the bale wrapper. The front ends of the inner support rollers 42b are just visible beneath the bale 24 while the rear ends of the support rollers 42a,42b protrude significantly beyond the rear edge of the bale 24. The bale has already been wrapped but the length of film 58 that extends from the film dispenser reel 50 to the bale 24 via the film cutter 60 has not yet been cut. Owing to the forward position of the bale 24 the film 58 is deflected through a relatively small angle Q2 where it passes around the film cutter 60. In this example the angle Q2 is about 30°, although in practive it may be as small as 0°. As a result the force between the film 58 and the film cutter 60 is relatively small, which reduces the risk of tearing. However, the position of the film 58 relative to the film cutter 60 is not well defined, which can prevent the cutter 60 from severing the film 58 cleanly.

It can been seen therefore that the angle of the film 58 as it passes around the film cutter 60 depends on the position of the front edge of the bale relative to the film cutter 60. This angle is influenced by both the position of the bale 24 on the support rollers 42a,42b and the size of the bale. The relatively large potential variation in this angle can lead to unreliable operation of the film cutter, as described above. The same problem occurs when wrapping bales of different lengths.

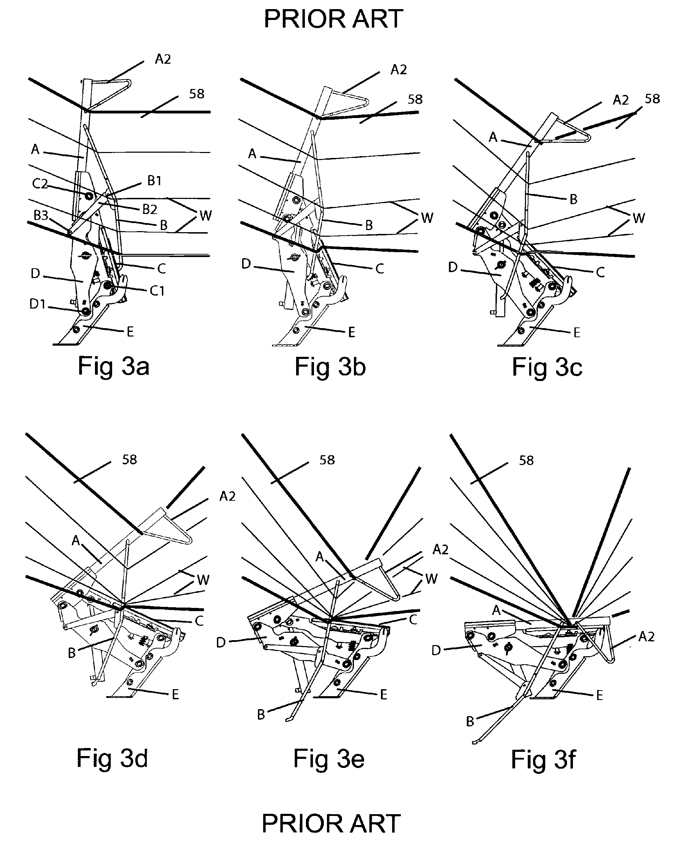

A prior art film cutter mechanism is shown in Figs. 3a to 3f in various consecutive stages of a film cutting operation. The film cutter includes a collector arm A, a support rod B, a cushion C, a pivot arm D and a fixed support leg E. The mechanism also includes a serrated knife (not shown) for cutting the film. The collector arm A is attached through pivot A1 at its proximal end to pivot arm D and includes a gathering element A2 at its distal end. The pivot arm D is attached through pivot D1 to the fixed support leg E. The collector arm A is configured to pivot forwards (clockwise in Figs 3a to 3f) about pivot A1 during a cutting operation as the pivot arm D pivots backwards (anticlockwise) about pivot D 1 at its proximal end.

The support rod B is attached through pivot B1 to pivot sub-arm B2, which is attached through pivot B3 to pivot arm D. It is configured to move downwards substantially in the axial direction of the support rod during a cutting operation as the film cutter moves from the collecting configuration to the clamping configuration.

The cushion C is attached at one end to the support leg E through a first pivot C1 and at the other end to the collector arm A through a second pivot C2. It is configured to pivot backwards (anticlockwise) during a cutting operation.

Prior to commencement of a cutting operation, the film cutter rests in the fully folded configuration shown in figure 3f. At the commencement of a cutting operation the pivot arm D pivots forwards (clockwise) and the collector arm pivots backwards (anticlockwise) to the positions shown in figure 3a and at the same time the support rod B is lifted to the raised position. As the film dispenser 50 rotates the film 58 is wrapped around the film cutter so that it is deflected around the support rod B and the collector arm A.

During subsequent steps of the cutting operation as shown in figures 3b to 3f the support rod B moves downwards pulling the film 58 down onto the cushion C and the collector arm A rotates forwards (clockwise) to clamp the film 58 against the cushion C so that it can be cut by the knife. It can be seen particularly in figures 3b to 3e that as the support rod B moves essentially in an axial direction (that is, in the direction of the axis of the rod), and in a direction that is substantially perpendicular to the length axis of the film strip 58. As it travels downwards the support rod B rubs against the film 58 that is trapped against the cushion C, producing wrinkles W in the lower part of the film strip. We have found that this relative movement between support rod B and the film strip can damage the film 58, increasing the risk of the film tearing.

It can also be seen in figure 3f that the collector arm A and the gathering element A2 help to gather the film 58 into a bundle as it is clamped against the cushion C. This helps the knife to form a clean cut. However, in practice we have found that the film may not be tightly bundled, depending on the position of the bale relative to the film cutter when the cutting operation commences.

Once the film has been bundled and clamped between the collector arm A and the cushion C and arm and the cushion are driven downwards relative to the knife to sever the film 58.

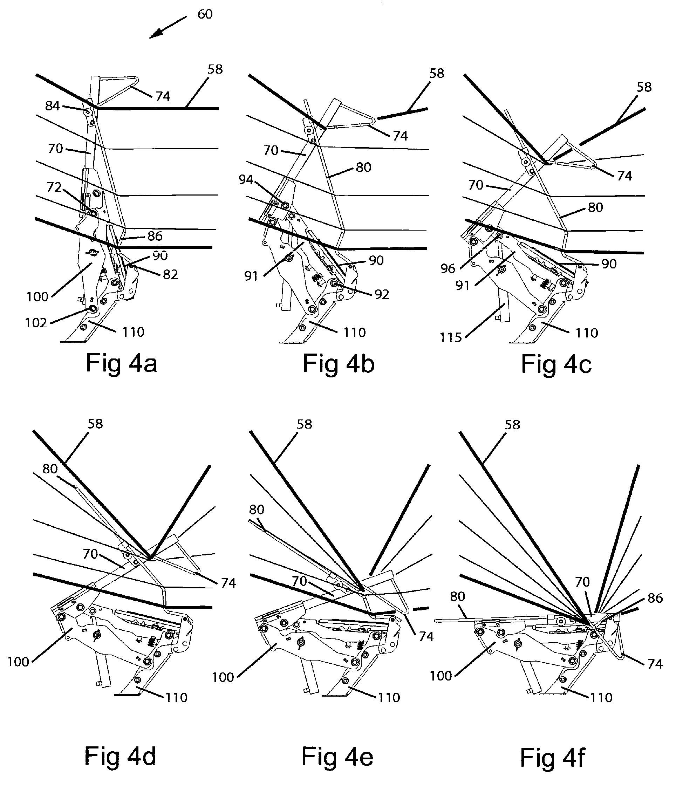

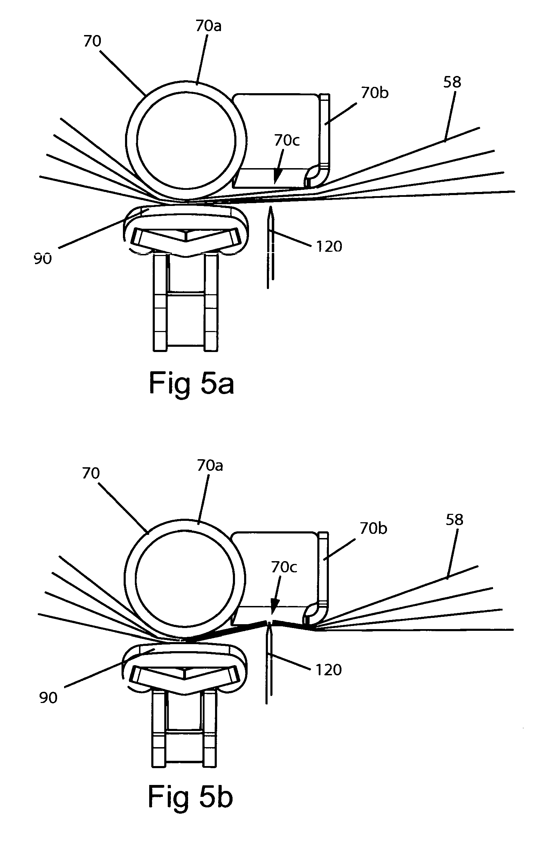

A film cutter mechanism 60 according to an embodiment of the invention is shown in Figs. 4a to 4f and Figs 5a and 5b in various consecutive stages of a film cutting operation. The film cutter includes a collector arm 70, a support rod 80, a cushion 90, a pivot arm 100, a fixed support leg 110 and a hydraulic actuator 115 that drives the cutter mechanism. The mechanism also includes a serrated knife 120 for cutting the film, as shown in figures 5a and 5b.

Referring to figures 4a to 4f, the collector arm 70 is attached through pivot 72 at its proximal end to pivot arm 100 and includes a gathering element 74 at its distal end. The pivot arm 100 is attached through pivot 102 to the fixed support leg 110. The collector arm 70 is configured to pivot forwards (clockwise in Figs 4a to 4f) about pivot 72 during a cutting operation as the pivot arm 100 pivots backwards (anticlockwise) about pivot 102 at its proximal end.

The support rod 80 is attached through pivot 82 at its proximal end to support leg 110, and is attached through a connection device 84 comprising a pivot/slide mechanism towards its distal end to the collector arm 70. It is configured to rotate rearwards (anticlockwise) during a cutting operation about pivot 82. The support rod 80 is largely straight but includes a V-shaped gathering formation 86 adjacent its proximal end.

The cushion 90 is mounted on a pivot link 91, which is attached at one end to the support leg 110 through a first pivot 92 and at the other end to the collector arm 70 through a second pivot 94. It is configured to rotate backwards (anticlockwise) during a cutting operation. The film cutter 60 is driven by the hydraulic actuator 115, which acts between a pivot point 96 on the pivot link 91 and a pivot point (not shown) elsewhere on the bale wrapper.

Prior to commencement of a cutting operation, the film cutter 60 rests in the fully folded configuration shown in figure 4f. At the commencement of a cutting operation the pivot arm 100 rotates forwards (clockwise) and the collector arm 70 rotates backwards (anticlockwise), and at the same time the support rod 80 is lifted to the raised position as shown in figure 4a. As the film dispenser 50 rotates the film 58 is wrapped around the film cutter 60 so that it is deflected jointly around the support rod 80 and the collector arm 70.

During subsequent steps of the cutting operation as shown in figures 4b to 4f the support rod 80 rotates backwards (anticlockwise) away from the film 58, and at the same time the collector arm 70 rotates forwards lifting the film 58 away from the support rod 80. At the same time the collector arm 70 gathers the film 58 into a bundle, which it carries down onto the cushion 90. The collector arm 70 then clamps the bundled film 58 against the cushion 90 so that it can be cut by the knife 120.

It can be seen particularly in figures 4b to 4e that the support rod 80 does not rub against the surface of the film 58 as it rotates backwards, thereby avoiding the risk of damaging the film. In particular, there is no axial movement of the support rod 80 relative to the film 58 and virtually no movement in any direction between the support rod 80 and the lower part of the film strip 58. Instead, the film 58 is lifted gently from the support rod 80 by the collector arm 70 as it rotates forwards. As the film 58 is bundled wrinkles W are produced in the upper part of the film strip but not in the lower part adjacent the cushion 90. The risk of damaging and tearing the film 58 is therefore considerably reduced.

It can also be seen in figure 4f that the collector arm 70 and the gathering element 74 help to gather the film 58 into a tight bundle against the cushion 90. The V-shaped gathering formation 86 adjacent the proximal end of the support rod 80 also helps to gather the film into a tight bundle. This helps the knife 120 to form a clean cut. The film cutter 60 of the present invention thus enables the film to be tightly bundled, regardless of the position of the bale 24 relative to the film cutter 60 when the cutting operation commences.

Finally, the collector arm 70 and the cushion 90 are driven downwards relative to the fixed knife 120 to sever the film 58. This is illustrated in figures 5a and 5b, where figure 5a shows the film 58 clamped between the collector arm 70 and the cushion 90 prior to severing, and figure 5b shows the situation as the collector arm 70 and the cushion 90 are driven downwards so that the knife 120 severs the film 58. Figures 5a and 5b also show more details of the construction of the collector arm 70, which comprises a round tube 70a and a rigid bar 70b that extends parallel to the tube 70a to provide a slot 70c into which the knife 120 extends when cutting the film 58.

The wrapped bale is finally deposited on the ground so that wrapping of a new bale can commence.

Various modifications of the invention are of course possible. For example, features of the invention can be applied to either a satellite-type bale wrapper as shown in the drawings, or to a turntable-type bale wrapper in which the bale is located on a turntable that rotates about a vertical axis while at the same time rotating the bale about a horizontal axis. The bale wrapper can also be arranged so that the bale rotates about a first axis and the dispenser rotates about a second axis that is substantially perpendicular to the first axis, where the first axis and the second axis are both substantially horizontal, or where one or both axes are inclined relative to the horizontal. The invention may also be embodied either in a dedicated bale wrapper apparatus or a combined baler and wrapper machine, and it may be employed in a bale wrapper that can be used to wrap either a square bale or a round bale of agricultural material.

## Claims

1. A film cutter for an agricultural bale wrapper, the film cutter (60) including a support element (80), a collector element(70), a cushion element (90) and a knife element (120), wherein the film cutter is reconfigurable between a collecting configuration in which wrapping film (58) dispensed by the bale wrapper is collected by the film cutter and a clamping configuration in which the wrapping film (58) is clamped between the collector element (70) and the cushion element (90) and is severed by the knife element (120); **characterised in that** the support element (80) is configured to engage the wrapping film (58) when the film cutter is in the collecting configuration and to disengage the wrapping film (58) when the film cutter is in the clamping configuration, and wherein the support element (80) is configured to move from the engaged condition to the disengaged condition without significant sliding contact between the support element (80) and the film (58).

2. A film cutter according to claim 1, wherein the support element (80) extends substantially perpendicular to the length direction of the wrapping film (58) when it is in an engaged condition.

3. A film cutter according to claim 1 or claim 2, wherein the support element (80) has a longitudinal axis and is configured to move from the engaged condition to the disengaged condition without significant movement in the direction of the longitudinal axis.

4. A film cutter according to any one of the preceding claims, wherein the support element (80) is mounted adjacent the collector element (70) and is configured so that when the film cutter is in the collecting configuration the wrapping film (58) is deflected around the support element (80).

5. A film cutter according to any one of the preceding claims, wherein the support element (80) is configured to pivot about a pivot axis located adjacent a first end thereof.

6. A film cutter according to claim 5, wherein the support element (80) is configured to pivot between an engaged position in which it extends substantially perpendicular to the length direction of the wrapping film and a disengaged position in which it extends substantially parallel to the length direction of the wrapping film.

7. A film cutter according to claim 6, wherein the support element (80) is configured to pivot through an angle in the range 60°-120°, preferably 80°-90°.

8. A film cutter according to claim 6 or claim 7, wherein the support element (80) is connected to the collector element (70) by a connecting element (84) that allows axial and pivoting movement of the support element relative to the collector element.

9. A film cutter according to any one of the preceding claims, wherein the support element (80) includes a gathering formation (86) for gathering the film into a bundle.

10. A film cutter according to claim 9, wherein the collector element (70) includes a gathering element (74) that cooperates with the gathering formation to gather the film into a bundle.

11. A film cutter according to any one of the preceding claims, wherein the collector element (70) is configured to pivot about a pivot axis located adjacent a first end thereof.

12. A film cutter according to any one of the preceding claims, wherein the collector element (70) is configured to lift the film away from the support element (80) as the film cutter is reconfigured from the collecting configuration to the clamping configuration.

13. A bale wrapper including a bale support assembly (22) that includes means (26) for rotating a bale about a substantially horizontal first axis, at least one film dispenser (50) for dispensing film onto the bale, drive means (54) for causing relative rotation between the bale support assembly and the film dispenser about a second axis that is substantially perpendicular to the first axis, and a film cutter (60) according to any one of the preceding claims.

14. A bale wrapper according to claim 13, wherein the bale support assembly (22) includes at least two roller assemblies (26) for supporting and rotating a bale.

15. A bale wrapper according to claim 13 or claim 14, comprising either a satellite-type bale wrapper having a rotating film dispenser, or a turntable-type bale wrapper having a rotating bale support assembly.

## Patentansprüche

1. Folienschneider für einen landwirtschaftlichen Ballenwickler, wobei der Folienschneider (60) ein Stützelement (80), ein Erfassungselement (70), ein Polsterelement (90) und ein Messerelement (120) umfasst, wobei der Folienschneider, der sich zwischen einer Erfassungsvorrichtung, in der von dem Ballenwickler abgegebene Wicklerfolie (58) von dem Folienschneider erfasst wird, und einer Einspannungsvorrichtung, in der die Wicklerfolie (58) zwischen dem Erfassungselement (70) und dem Polsterelement (90) eingespannt ist und von dem Messerelement (120) getrennt wird, befindet, verstellbar ist; **dadurch gekennzeichnet, dass** das Stützelement (80) so konzipiert ist, dass es in die Wicklerfolie (58) einrastet, wenn der Folienschneider sich in der Erfassungsposition befindet und die Wicklerfolie (58) löst, wenn sich der Folienschneider in der Einspannungsposition befindet, und wobei das Stützelement (80) so konzipiert ist, dass es sich von dem eingerasteten Zustand in den gelösten Zustand ohne wesentlichen Gleitkontakt zwischen dem Stützelement (80) und der Folie (58) bewegt.

2. Folienschneider nach Anspruch 1, wobei sich das Stützelement (80) im Wesentlichen senkrecht zu der Längsrichtung der Wicklerfolie (58) befindet, wenn es eingerastet ist.

3. Folienschneider nach Anspruch 1 oder Anspruch 2, wobei das Stützelement (80) eine Längsachse aufweist und so konzipiert ist, dass es vom eingerasteten Zustand in den gelösten Zustand wechselt ohne wesentliche Bewegung in der Richtung der Längsachse.

4. Folienschneider nach einem der vorhergehenden Ansprüche, wobei das Stützelement (80) neben dem Sammelelement (70) angebracht ist und so konzipiert ist, dass, wenn der Folienschneider sich in der Erfassungsposition befindet, die Wicklerfolie (58) um das Stützelement (80) gelenkt wird.

5. Folienschneider nach einem der vorhergehenden Ansprüche, wobei das Stützelement (80) so konzipiert ist, dass es um eine Schwenkachse schwenkt, die neben einem ersten Ende davon angeordnet ist.

6. Folienschneider nach Anspruch 5, wobei das Stützelement (80) konzipiert ist, um zwischen einer eingerasteten Stellung, in der es sich im Wesentlichen senkrecht zu der Längsrichtung der Wicklerfolie befindet, und einer gelösten Stellung, in der es sich im Wesentlichen parallel zur Längsrichtung der Wicklerfolie befindet, zu schwenken.

7. Folienschneider nach Anspruch 6, wobei das Stützelement (80) konzipiert ist, um durch einen Winkel im Bereich von 60° bis 120° zu schwenken, vorzugsweise 80° - 90°.

8. Folienschneider nach Anspruch 6 oder Anspruch 7, wobei das Stützelement (80) mit dem Erfassungselement (70) durch ein Verbindungselement (84) verbunden ist , das Axial- und Schwenkbewegung des Stützelements relativ zum Erfassungselement zulässt.

9. Folienschneider nach einem der vorhergehenden Ansprüche, wobei das Stützelement (80) eine Sammelvorrichtung (86) umfasst, um die Folie in einem Bündel zu erfassen.

10. Folienschneider nach Anspruch 9, wobei das Erfassungselement (70) eine Sammelvorrichtung (74) umfasst, die mit der Sammelkonstruktion zusammenwirkt, um die Folie in einem Bündel zu erfassen.

11. Folienschneider nach einem der vorhergehenden Ansprüche, wobei das Sammelelement (70) konzipiert ist, um sich um eine Schwenkachse zu schwenken, die neben einem ersten Ende davon angeordnet ist.

12. Folienschneider nach einem der vorhergehenden Ansprüche, wobei das Sammelelement (70) konzipiert ist, um die Folie von dem Stützelement (80) abzuheben, während der Folienschneider von der Erfassungsposition in die Einspannungsposition bewegt wird.

13. Ballenwickler einschließlich einer Ballenstützanordnung (22), die eine Vorrichtung (26) zum Drehen eines Ballens um eine im Wesentlichen horizontale erste Achse umfasst, wenigstens einen Folienabroller (50) zum Abgeben einer Folie auf den Ballen, eine Antriebsvorrichtung (54) zum Antreiben einer relativen Drehung zwischen der Ballenstützanordnung und dem Folienabroller um eine zweite Achse, die im Wesentlichen senkrecht zu der ersten Achse ist, und einen Folienschneider (60) nach einem der vorhergehenden Ansprüche.

14. Ballenwickler nach Anspruch 13, wobei die Ballenstützanordnung (22) wenigstens zwei Walzenanordnungen (26) zum Stützen und Drehen eines Ballens umfasst.

15. Ballenwickler nach Anspruch 13 oder Anspruch 14, umfassend entweder einen satellitenartigen Ballenwickler mit einem sich drehenden Folienabroller oder einen drehscheibenartigen Ballenwickler mit einer sich drehenden Ballenstützanordnung.

## Revendications

1. Coupe-film pour enrubanneuse agricole, le coupe-film (60) comprenant un élément de soutien (80), un élément de collecte (70), un élément d'amortissement (90) et un élément de coupe (120), dans lequel le coupe-film peut être reconfiguré entre une configuration de collecte, dans laquelle le film d'enrubannage (58) distribué par l'enrubanneuse est collecté par le coupe-film, et une configuration de pinçage, dans laquelle le film d'enrubannage (58) est pincé entre l'élément de collecte (70) et l'élément d'amortissement (90) et est coupé par l'élément de coupe (120) ; **caractérisé en ce que** l'élément de soutien (80) peut entrer en prise avec le film d'enrubannage (58) lorsque le coupe-film est dans la configuration de collecte, et se dégager du film d'enrubannage (58) lorsque le coupe-film est dans la configuration de pinçage, et dans lequel l'élément de soutien (80) peut se déplacer de la position en prise à la position dégagée sans contact de glissement important entre l'élément de soutien (80) et le film (58).

2. Coupe-film selon la revendication 1, dans lequel l'élément de soutien (80) s'étend dans une direction essentiellement perpendiculaire à la longueur du film d'enrubannage (58) lorsqu'il est en prise.

3. Coupe-film selon la revendication 1 ou 2, dans lequel l'élément de soutien (80) a un axe longitudinal et peut se déplacer de la position en prise à la position dégagée sans mouvement important dans la direction de l'axe longitudinal.

4. Coupe-film selon l'une quelconque des revendications précédentes, dans lequel l'élément de soutien (80) est installé à côté de l'élément de collecte (70) et est configuré de telle sorte que, lorsque le coupe-film est dans la configuration de collecte, le film d'enrubannage (58) est dévié autour de l'élément de soutien (80).

5. Coupe-film selon l'une quelconque des revendications précédentes, dans lequel l'élément de soutien (80) peut pivoter autour d'un axe de pivot se trouvant à côté d'une première extrémité de celui-ci.

6. Coupe-film selon la revendication 5, dans lequel l'élément de soutien (80) peut pivoter entre une position en prise, dans laquelle il s'étend dans une direction essentiellement perpendiculaire à la longueur du film d'enrubannage, et une position dégagée, dans laquelle il s'étend dans une direction essentiellement parallèle à la longueur du film d'enrubannage.

7. Coupe-film selon la revendication 6, dans lequel l'élément de soutien (80) peut pivoter dans un angle compris entre 60° et 120°, de préférence, entre 80° et 90°.

8. Coupe-film selon la revendication 6 ou 7, dans lequel l'élément de soutien (80) est relié à l'élément de collecte (70) par un élément de liaison (84) permettant un mouvement axial et rotatif de l'élément de soutien par rapport à l'élément de collecte.

9. Coupe-film selon l'une quelconque des revendications précédentes, dans lequel l'élément de soutien (80) comprend une formation de rassemblement (86) servant à rassembler le film en un paquet.

10. Coupe-film selon la revendication 9, dans lequel l'élément de collecte (70) comprend un élément de rassemblement (74) coopérant avec la formation de rassemblement pour rassembler le film en un paquet.

11. Coupe-film selon l'une quelconque des revendications précédentes, dans lequel l'élément de collecte (70) peut pivoter autour d'un axe de pivot se trouvant à côté d'une première extrémité de celui-ci.

12. Coupe-film selon l'une quelconque des revendications précédentes, dans lequel l'élément de collecte (70) peut soulever le film de l'élément de soutien (80) lorsque le coupe-film est reconfiguré entre la configuration de collecte et la configuration de pinçage.

13. Enrubanneuse comprenant un ensemble de soutien de balle (22) comprenant un dispositif (26) servant à faire tourner une balle autour d'un premier axe essentiellement horizontal, au moins un distributeur de film (50) servant à distribuer du film sur la balle, un dispositif d'entraînement (54) servant à causer une rotation relative entre l'ensemble de soutien de balle et le distributeur de film autour d'un deuxième axe essentiellement perpendiculaire au premier axe, et un coupe-film (60) selon l'une quelconque des revendications précédentes.

14. Enrubanneuse selon la revendication 13, dans laquelle l'ensemble de soutien de balle (22) comprend au moins deux ensembles de rouleaux (26) servant à soutenir et à faire tourner une balle.

15. Enrubanneuse selon la revendication 13 ou 14, se composant soit d'une enrubanneuse de type satellite ayant un distributeur de film rotatif, soit d'une enrubanneuse de type pivotant ayant un ensemble de soutien de balle rotatif.
